# EUROPÄISCHE PATENTSCHRIFT

(11) **EP 3 106 637 B1**
(45) Veröffentlichungstag und Bekanntmachung des Hinweises auf die Patenterteilung: **17.04.2019**
(21) Anmeldenummer: 16001328.0
(22) Anmeldetag: 13.06.2016
(51) Int. Cl.: F02D 13/02, F02D 19/02, F01N 3/20, F01N 13/00

(54) **VERFAHREN ZUM BETREIBEN EINES GASMOTORS**
METHOD FOR OPERATING A GAS MOTOR
PROCEDE DESTINE AU FONCTIONNEMENT D'UN MOTEUR A GAZ

(30) Priorität: 20.06.2015 DE 102015007908
(43) Veröffentlichungstag der Anmeldung: 21.12.2016
(73) Patentinhaber: MAN Truck & Bus AG, 80995 München (DE)
(72) Erfinder: Barciela, Bruno, 90489 Nürnberg (DE); McMackin, Martin, 90491 Nürnberg (DE)
(74) Vertreter: Liebl, Thomas

(56) Entgegenhaltungen:
- DE-B3- 10 359 087
- US-A- 5 524 432
- US-A1- 2005 229 900

## Beschreibung

Die Erfindung betrifft ein Verfahren zum Betreiben eines, insbesondere stationären, Gasmotors nach dem Oberbegriff des Patentanspruches 1, eine Vorrichtung mit einem, insbesondere stationären, Gasmotor nach dem Oberbegriff des Patentanspruches 14 sowie ein Fahrzeug, insbesondere ein Nutzfahrzeug, zur Durchführung des Verfahrens und/oder mit der Vorrichtung nach Patentanspruch 15.

Es ist bekannt, einen mit einem kohlenstoffhaltigen Brenngas betriebenen Gasmotor mit einem sehr mageren Brenngas-Luft-Gasgemisch (beispielsweise Luftzahl-Wert λ=1,7) zu betreiben. Auf diese Weise werden von dem Gasmotor emittierte Stickoxide (NOₓ) gering gehalten. Eine stark magere Betriebsweise des Gasmotors kann jedoch thermodynamisch bedingt eine deutliche Absenkung des Wirkungsgrads des Gasmotors zur Folge haben. Zudem kann es bei einem mager betriebenen Gasmotor erforderlich sein, in einem sich an den Gasmotor anschließenden Abgasstrang eine stickoxidreduzierende Abgasnachbehandlung vorzusehen, zum Beispiel wenn die von dem Gasmotor emittierten Stickoxide (NOₓ) die gesetzlich vorgeschriebenen Grenzwerte überschreiten. Üblicherweise wird bei einem mager betriebenen Motor ein aktiver NH₃-SCR-Katalysator (Selective Catalytic Reduction) als Abgasnachbehandlungselement zur NOx-Reduktion verwendet, mittels dem Stickoxide (NOₓ) des durch den SCR-Katalysator strömenden Abgases mit Ammoniak (NH₃) als Reduktionsmittel verringert werden. Das Ammoniak wird dabei üblicherweise, in Abgas-Strömungsrichtung gesehen, zwischen dem Gasmotor und dem SCR-Katalysator als wässrige Harnstofflösung in den Abgasstrang eingeleitet, da das direkt aus dem Gasmotor strömende Abgas normalerweise kein Ammoniak enthält. Eine derartige Zuführung von Ammoniak ist jedoch wegen des Vorsehens zusätzlicher Injektoren, zusätzlicher Tanks und einer Dosierregelung (inklusive Sensoren) aufwändig und, insbesondere aufgrund des ständigen Verbrauchs von Ammoniak, kostenintensiv.

Des Weiteren ist es auch bekannt, einen mit einem kohlenstoffhaltigen Brenngas betriebenen Gasmotor nach einem Miller-Kreisprozess zu betreiben. Bei diesem Miller-Kreisprozess werden die Einlassventile des Gasmotors sehr früh geschlossen. Dadurch wird die in einem Zylinder des Gasmotors befindliche Ladung zunächst expandiert, wodurch sich die Temperatur in einem Brennraum des Zylinders verringert. Eine Verringerung der Temperatur in dem Brennraum bewirkt eine Erhöhung der Klopffestigkeit des Gasmotors. Dadurch kann das Verdichtungsverhältnis des Gasmotors und somit der Wirkungsgrad des Gasmotors erhöht werden.

Bei der Anwendung des Miller-Kreisprozesses ist es üblicherweise erforderlich, die dem Gasmotor zugeführte Verbrennungsluft bzw. das dem Gasmotor zugeführte Brenngas-Verbrennungsluft-Gasgemisch mit einem hohen Ladedruck zu beaufschlagen. Dieser hohe Ladedruck bzw. ein positives Spülgefälle über den Brennraum führt bei Gasmotoren mit externer Gemischbildung zu einer Erhöhung des Schlupfs von unverbrannten Kohlenwasserstoffen (C_{y}H_{z}), wodurch von dem Gasmotor eine große Menge an Kohlenwasserstoffen (C_{y}H_{z}) emittiert wird. Dieser Schlupf von unverbrannten Kohlenwasserstoffen (C_{y}H_{z}) kann durch eine Verringerung der Ventilüberschneidung (Zeitraum, in dem sowohl die Einlassventile als auch die Auslassventile des Gasmotors geöffnet sind) verringert werden. Eine Verringerung der Ventilüberschneidung bewirkt jedoch üblicherweise eine Absenkung des Wirkungsgrads des Gasmotors.

Somit kann zusammenfassend festgehalten werden, dass ein mager betriebener und nach dem Miller-Kreisprozess betriebener Gasmotor aufgrund der verringerten Ventilüberschneidung nicht mit dem maximal möglichen Wirkungsgrad betrieben werden kann. Zudem hat die Verwendung eines NH₃-SCR-Katalysators zur Verringerung der von der Brennkraftmaschine emittierten Stickoxide (NOₓ) die bereits genannten Nachteile.

Aufgabe der Erfindung ist es daher, ein Verfahren zum Betreiben eines, insbesondere stationären, Gasmotors, sowie eine Vorrichtung mit einem, insbesondere stationären, Gasmotor, bereitzustellen, mittels denen der Gasmotor mit einem hohen Wirkungsgrad betrieben und die in dem Abgas des Gasmotors enthaltenen Schadstoffe effektiv und einfach verringert werden können. Für den Stand der Technik werden folgende Dokumente als relevant zitiert: US 2005/229900 A1, US 5 524 432 A, DE 103 59 087 B3.

Diese Aufgabe wird durch die Merkmale der unabhängigen Ansprüche gelöst. Bevorzugte Weiterbildungen sind in den Unteransprüchen offenbart.

Gemäß Patentanspruch 1 wird ein Verfahren zum Betreiben eines, insbesondere stationären, Gasmotors vorgeschlagen, wobei ein sich an den Gasmotor anschließender Antriebsstrang vorgesehen ist, der von dem Abgas des Gasmotors durchströmt wird, wobei der Gasmotor mit einem mageren Brenngas-Luft-Gasgemisch betrieben wird, wobei der Gasmotor nach einem Miller-Kreisprozess betrieben wird, vorzugsweise dergestalt, dass der Schließzeitpunkt des wenigstens einen Einlassventils des Gasmotors in einem Kurbelwinkelbereich von etwa 50° Kurbelwinkel vor UT (unterer Totpunkt) bis etwa 10° Kurbelwinkel vor UT liegt. Erfindungsgemäß weist der Abgasstrang wenigstens ein SCR-Katalysatorelement auf, mittels dem Stickoxide (NOₓ) des durch bzw. über das SCR-Katalysatorelement strömenden Abgases mit Kohlenwasserstoff (C_{y}H_{z}) als Reduktionsmittel verringert werden, wobei zumindest ein Teil des durch das SCR-Katalysatorelement strömenden Kohlenwasserstoffs (C_{y}H_{z}) ein Bestandteil des Abgases des Gasmotors ist.

Auf diese Weise kann der Gasmotor mit einem besonders hohen Wirkungsgrad betrieben werden, da die unverbrannten Kohlenwasserstoffe (C_{y}H_{z}) des Abgases nun als Reduktionsmittel zur Verringerung der in dem Abgas enthaltenen Stickoxide (NOₓ) verwendet werden. Dadurch kann der Gasmotor beispielsweise mit einer größeren Ventilüberschneidung betrieben werden, was eine Erhöhung des Wirkungsgrads des Gasmotors ermöglicht. Zudem kann der Gasmotor beispielsweise auch mit einem fetteren Brenngas-Luft-Gasgemisch betrieben werden, wodurch ebenfalls der Wirkungsgrad des Gasmotors erhöht werden kann. Weiter kann der Gasmotor beispielsweise auch mit einem erhöhten Ladedruck betrieben werden, was ebenfalls eine Erhöhung des Wirkungsgrads des Gasmotors bewirken kann. Des Weiteren kann auch der Zündzeitpunkt in Richtung früh verstellt werden, wodurch der Wirkungsgrad des Gasmotors ebenfalls erhöht werden kann. Zudem kann auch das wenigstens eine Einlassventil des Gasmotors früher geschlossen werden, wodurch der Wirkungsgrad des Gasmotors erhöht werden kann. Die aufgrund der vergrößerten Ventilüberschneidung und/oder des fetteren Brenngas-Luft-Gasgemischs und/oder des erhöhten Ladedrucks und/oder des früheren Zündzeitpunktes und/oder des früheren Schließzeitpunkts des Einlassventils erhöhte Menge an emittierten Kohlenwasserstoffen (C_{y}H_{z}) wird durch die Reaktion der emittierten Kohlenwasserstoffen (C_{y}H_{z}) mit den in dem Abgas enthaltenen Stickoxiden (NOₓ) wieder verringert. Des Weiteren werden durch die erfindungsgemäße Verfahrensführung die in dem Abgas enthaltenen Schadstoffe auch besonders einfach und effektiv verringert, da zur Verringerung der in dem Abgas enthaltenen Stickoxide (NOₓ) nun kein Ammoniak in den Abgasstrang eingeleitet werden muss. Die Verringerung der Stickoxide (NOₓ) erfolgt nun mittels der bereits in dem Abgas des Gasmotors enthaltenen Kohlenwasserstoffe (C_{y}H_{z}).

SCR-Katalysatorelemente, mittels denen Stickoxide (NOₓ) mit Kohlenwasserstoff (C_{y}H_{z}) als Reduktionsmittel verringert werden, sind bereits aus dem Stand der Technik bekannt. Die Stickoxide (NOₓ) werden dabei üblicherweise nach folgender Reaktionsgleichung umgesetzt bzw. konvertiert:

2NOₓ + C_{y}H_{z} + (y + z/4 - x)O₂ →N₂ + yCO₂ + (z/2)H₂O

(x=1 oder 2)

Mit Methan als Reduktionsmittel kann die Reaktionsgleichung beispielsweise wie folgt lauten:

2NO + CH₄ + O₂ → N₂ + CO₂ + 2H₂O

2NO₂ + CH₄ → N₂ + CO₂ + 2H₂O

Parallel-/Nebenreaktionen im SCR-Katalysatorelement und/oder Hauptreaktionen in einem optional vorgesehenen Oxidationskatalysatorelement können beispielsweise sein:

2NO + O₂ ↔ 2NO₂ (NO-Oxidation)

C_{y}H_{z} + (y + z/4)O₂ → yCO₂ + (z/2)H₂O (C_{y}H_{z}-Oxidation allgemein)

CH₄ + 2O₂ → CO₂ + 2H₂O (Methan-Oxidation)

In einer bevorzugten erfindungsgemäßen Verfahrensführung wird der Gasmotor mit einem Brenngas-Luft-Gasgemisch betrieben, das einen Luftzahl-Wert (Lambda) von 1,2 bis 1,6 aufweist.

Weiter bevorzugt liegt der Zündzeitpunkt des Gasmotors in einem Kurbelwinkelbereich von 40° Kurbelwinkel vor OT (oberer Totpunkt) bis 10° Kurbelwinkel vor OT. Besonders bevorzugt ist dabei vorgesehen, dass der Zündzeitpunkt des Gasmotors in einem Kurbelwinkelbereich von 30° Kurbelwinkel vor OT bis 15° vor OT liegt. Mittels eines derartigen Zündzeitpunktes kann der Gasmotor mit einem besonders hohen Wirkungsgrad betrieben werden.

Vorzugsweise liegt der Schließzeitpunkt des wenigstens einen Einlassventils des Gasmotors in einem Kurbelwinkelbereich von 45° Kurbelwinkel vor UT bis 20° Kurbelwinkel vor UT. Durch dieses frühe Schließen des wenigstens einen Einlassventils des Gasmotors wird der Miller-Kreisprozess optimiert und der Gasmotor mit einem besonders hohen Wirkungsgrad betrieben.

In einer weiteren bevorzugten Verfahrensführung weist die Ventilüberschneidung des wenigstens einen Einlassventils des Gasmotors und des wenigstens einen Auslassventils des Gasmotors einen Ventilüberschneidungs-Wert von 0° Kurbelwinkel bis 50° Kurbelwinkel, vorzugsweise einen Ventilüberschneidungs-Wert von 30° Kurbelwinkel bis 50° Kurbelwinkel, auf. Mittels eines Ventilüberschneidungs-Werts von 30° Kurbelwinkel bis 50° Kurbelwinkel kann der Gasmotor mit einem besonders hohen Wirkungsgrad betrieben und in Verbindung mit dem SCR-Katalysator die in dem Abgas des Gasmotors enthaltenen Schadstoffe besonders effektiv verringert werden.

Vorzugsweise wird der Gasmotor mit einem Brenngas betrieben, das einen Methan-Anteil (CH₄) größer als 40 Vol.%, bevorzugt größer als 60 Vol.%, besonders bevorzugt größer als 80 Vol.% aufweist. Bevorzugt ist dabei vorgesehen, dass das Brenngas zumindest teilweise durch Erdgas und/oder durch Biogas gebildet ist.

In einer bevorzugten Ausgestaltung weist der Abgasstrang wenigstens eine Abgasturbine eines Abgasturboladers auf. Bevorzugt ist dabei vorgesehen, dass das wenigstens eine SCR-Katalysatorelement, in Abgas-Strömungsrichtung gesehen, stromauf der Abgasturbine in oder an dem Abgasstrang angeordnet ist. Eine derartige Anordnung ist vorteilhaft, da durch die Reaktion der Kohlenwasserstoffe (C_{y}H_{z}) mit den Stickoxiden (NOₓ) und Sauerstoff (O₂) Wärmeenergie freigesetzt und somit die Enthalpie des Abgases erhöht wird. Mittels dieser erhöhten Enthalpie des Abgases wird die Effektivität bzw. die Verdichtungsleistung des Abgasturboladers erhöht. Weiter ist eine derartige Anordnung des SCR-Katalysatorelements vorteilhaft, wenn dadurch der Abgasdruck bzw. die Abgastemperatur stromab der Abgasturbine zur Erreichung der gewünschten Umsatzrate von Stickoxiden (NOₓ) und Kohlenwasserstoffen (C_{y}H_{z}) günstiger ist.

Alternativ und/oder zusätzlich kann das wenigstens eine SCR-Katalysatorelement aber auch, in Abgas-Strömungsrichtung gesehen, stromab der Abgasturbine in oder an den Abgasstrang angeordnet sein. Eine derartige Anordnung ist von Vorteil, wenn die Abgastemperatur stromauf der Abgasturbine eine zu hohe Temperaturbelastung für das SCR-Katalysatorelement darstellt. Zudem ist eine derartige Anordnung auch vorteilhaft, wenn die durch die an dem SCR-Katalysatorelement stattfindenden Reaktionen freigesetzte Wärmeenergie zu einer hohen Temperaturbelastung der Abgasturbine führen. Weiter ist eine derartige Anordnung des SCR-Katalysatorelements vorteilhaft, wenn dadurch der Abgasdruck bzw. die Abgastemperatur stromab der Abgasturbine zur Erreichung der gewünschten Umsatzrate von Stickoxiden (NOₓ) und Kohlenwasserstoffen (C_{y}H_{z}) günstiger ist. (Beispielsweise aufgrund des NO₂/NOₓ-Verhältnisses, welches bei hohen Temperaturen thermodynamisch limitiert ist)
Weiter bevorzugt ist eine Energie-Rückgewinnungseinrichtung vorgesehen, mittels der aus der Wärmeenergie des Abgases nutzbare Energie rückgewonnen und/oder erzeugt werden kann, wobei die Energie-Rückgewinnungseinrichtung wenigstens einen wärmeaufnehmenden Wärmeübertrager aufweist, mittels dem die Wärmeenergie des Abgases aufgenommen werden kann. Bevorzugt ist dabei vorgesehen, dass der wenigstens eine wärmeaufnehmende Wärmeübertrager, in Abgas-Strömungsrichtung gesehen, stromab des SCR-Katalysatorelements an oder in dem Abgasstrang angeordnet ist. Diese Anordnung des wärmeaufnehmenden Wärmeübertragers ist vorteilhaft, da dadurch die aufgrund des SCR-Katalysatorelements erhöhte Enthalpie des Abgases zur Rückgewinnung von nutzbarer Energie verwendet werden kann. Die nutzbare Energie kann dabei beispielsweise als hydraulische und/oder pneumatische und/oder elektrische und/oder mechanische Energie ausgebildet sein. Die Rückgewinnung der Energie kann beispielsweise mittels eines thermodynamischen Kreisprozesses erfolgen.

Vorzugsweise weist der Abgasstrang wenigstens ein Oxidationskatalysatorelement auf. Bevorzugt ist dabei vorgesehen, dass das wenigstens eine Oxidationskatalysatorelement, in Abgas-Strömungsrichtung gesehen, stromauf des SCR-Katalysatorelements an oder in dem Abgasstrang angeordnet ist. Eine Anordnung des Oxidationskatalysatorelements stromauf des SCR-Katalysatorelements hat den Vorteil, dass mittels des Oxidationskatalysatorelements zunächst die Oxidation von Stickstoffmonoxid (NO) zu Stickstoffdioxid (NO₂) gefördert wird. Dadurch wird das NO₂/NOₓ₋Verhältnis des in das SCR-Katalysatorelement einströmenden Abgases erhöht und die Reduzierung der Stickoxide (NOₓ) mittels des SCR-Katalysatorelements begünstigt. Weiter bevorzugt ist das Oxidationskatalysatorelement, in Abgas-Strömungsrichtung gesehen, stromauf des wärmeaufnehmende Wärmeübertragers der Energie-Rückgewinnungseinrichtung in oder an dem Abgasstrang angeordnet, um die die mittels des Oxidationskatalysatorelements erhöhte Enthalpie des Abgases zur Rückgewinnung von nutzbarer Energie zu verwenden.

Alternativ und/oder zusätzlich kann das wenigstens eine Oxidationskatalysatorelement aber auch, in Abgas-Strömungsrichtung gesehen, stromab des SCR-Katalysatorelements an oder in dem Abgasstrang angeordnet sein. Mittels eines stromab des SCR-Katalysatorelements angeordneten Oxidationskatalysatorelement können stromab des SCR-Katalysatorelements strömende Kohlenwasserstoffe (C_{y}H_{z}) umgesetzt bzw. konvertiert werden.

Weiter bevorzugt sind das SCR-Katalysatorelement und das Oxidationskatalysatorelement durch ein einziges Katalysatorelement gebildet, um einen besonders kompakten Aufbau zu realisieren. Bevorzugt ist dabei vorgesehen, dass ein Trägerkörper des Katalysatorelements mit einen Katalysatormaterial beschichtet ist, das sowohl eine stickoxidreduzierende und eine oxidierende Wirkung aufweist.

Vorzugsweise weist ein Trägerkörper des Katalysatorelements wenigstens einen Stickoxidreduzierungsbereich auf, an dem der Trägerkörper mit einem stickoxidreduzierenden Katalysatormaterial beschichtet ist, wobei der Trägerkörper wenigstens einen an den Stickoxidreduzierungsbereich angrenzenden oder von dem Stickoxidreduzierungsbereich beabstandeten Oxidationsbereich aufweist, an dem der Trägerkörper mit einem oxidierenden Katalysatormaterial beschichtet ist.

Alternativ kann der Trägerkörper des Katalysatorelements auch mit mehreren übereinander und/oder aufeinander liegenden Katalysatormaterialschichten beschichtet sein, wobei wenigstens eine Schicht ein Katalysatormaterial mit einer stickoxidreduzierenden Wirkung aufweist, und wobei wenigstens eine Schicht ein Katalysatormaterial mit einer oxidierenden Wirkung aufweist.

In einer weiteren bevorzugten Ausgestaltung ist eine Fördereinrichtung vorgesehen, mittels der das in einem Kraftstofftank gespeicherte Brenngas an einem Brenngas-Einleitbereich des Abgasstrangs in den Abgasstrang gefördert wird, wobei der Brenngas-Einleitbereich, in Abgas-Strömungsrichtung gesehen, stromab eines Abgas-Einströmbereichs, an dem das Abgas des Gasmotors in den Abgasstrang einströmt, und stromauf des SCR-Katalysatorelements an dem Abgasstrang angeordnet ist. Mittels einer derartigen Fördereinrichtung können beispielsweise Kohlenwasserstoffe (C_{y}H_{z}) in den Abgasstrang eingeleitet werden, wenn die Menge der in dem Abgas des Gasmotors enthaltenen Kohlenwasserstoffe (C_{y}H_{z}) zu gering ist, um die in dem Abgas enthaltenen Stickoxide effektiv bzw. ausreichend zu verringern. Bevorzugt ist dabei eine Regel- und/oder Steuereinrichtung vorgesehen, mittels der die Menge des mittels der Fördereinrichtung geförderten Brenngases geregelt und/oder gesteuert wird. Mittels der Regel- und/oder Steuereinrichtung wird die Menge des mittels der Fördereinrichtung geförderten Brenngases dabei vorzugsweise derart geregelt und/oder gesteuert, dass die in dem Abgas enthaltenen Stickoxide unabhängig von der Betriebsweise des Gasmotors stets unterhalb eines definierten Stickoxid-Grenzwerts gehalten werden. Der definierte Stickoxid-Grenzwert kann dabei beispielsweise durch Abgasvorschriften festgelegt sein. Eine derartige Regelung ist vor allem bei Gasmotoren vorteilhaft, die über ein breites Kennfeld von Betriebspunkten betrieben werden. Derartige Gasmotoren sind üblicherweise an einem Fahrzeug vorgesehen.

Weiter bevorzugt enthält das Katalysatormaterial des SCR-Katalysatorelements als Aktivkomponente Silber und/oder Kupfer und/oder Platin und/oder Indium und/oder CeO₂ und/oder Kobalt und/oder Palladium. Mittels derartiger Aktivkomponenten können die im Abgas enthaltenen Stickoxide, insbesondere mit Methan als Reduktionsmittel, besonders effektiv reduziert werden. Weiter bevorzugt enthält das Katalysatormaterial des SCR-Katalysatorelements als Trägerkomponente Al₂O₃ und/oder TiO₂ und/oder SiO₂ und/oder ZrO₂. Alternativ und/oder zusätzlich kann das Katalysatormaterial des SCR-Katalysatorelements auch Zeolith und/oder modifiziertes Zeolith (modifiziert beispielsweise durch lonenaustausch und/oder durch Einbringung von Metallpartikeln) enthalten.

Besonders bevorzugt besteht eine Katalysatormaterialschicht des SCR-Katalysatorelements zumindest bereichsweise aus Ag-Al₂O₃, vorzugsweise aus Ag-Al₂O₃ mit 1 bis 3 Gew.% Ag. Mit einer derartigen Zusammensetzung des Katalysatormaterials wird eine besonders hohe Umsetzungsrate der in dem Abgas enthaltenen Stickoxide erreicht. Insbesondere wird mittels eines derartigen Katalysatormaterials auch eine hohe Umsetzungsrate der Stickoxide erreicht, wenn größere Mengen von Wasser anwesend sind. Alternativ und/oder zusätzlich kann eine Katalysatormaterialschicht des SCR-Katalysatorelements zumindest bereichsweise auch aus Pt/In-ZSM-5 und/oder aus CeO₂-In-ZSM und/oder aus Co-ZSM-5 bestehen. Mittels derart ausgebildeten Katalysatormaterialschichten wird ebenfalls eine hohe Umsetzungsrate der in den Abgas enthaltenen Stickoxide erreicht. Weiter alternativ und/oder zusätzlich kann eine Katalysatormaterialschicht des SCR-Katalysatorelements zumindest bereichsweise aus Cu-Al₂O₃, vorzugsweise aus Cu-Al₂O₃ mit 6 bis 10 Gew.% Cu, bestehen. Weiter kann eine Katalysatormaterialschicht des SCR-Katalysatorelements zumindest bereichsweise auch aus Pd-ZrO₂, vorzugsweise aus Pd-ZrO₂ mit 0,1 bis 0,5 Gew.% Pd, bestehen.

Zur Lösung der bereits genannten Aufgabe wird ferner eine Vorrichtung beansprucht, mit einem, insbesondere stationären, Gasmotor, mit einem sich an dem Gasmotor anschließenden Abgasstrang, der von dem Abgas des Gasmotors durchströmt wird, wobei der Gasmotor mit einem mageren Brenngas-Luft-Gasgemisch betrieben werden kann, wobei der Gasmotor nach einem Miller-Kreisprozess betrieben werden kann, vorzugsweise dergestalt, dass der Schließzeitpunkt des wenigstens einen Einlassventils des Gasmotors in einem Kurbelwinkelbereich von etwa 50° Kurbelwinkel vor UT (unterer Totpunkt) bis etwa 10° Kurbelwinkel vor UT liegt. Erfindungsgemäß weist der Abgasstrang wenigstens ein SCR-Katalysatorelement auf, mittels dem Stickoxide (NOₓ) des durch bzw. über das SCR-Katalysatorelement strömende Abgases mit Kohlenwasserstoff (C_{y}H_{z}) als Reduktionsmittel verringert werden kann, wobei zumindest ein Teil des durch das SCR-Katalysatorelement strömenden Kohlenwasserstoffs (C_{y}H_{z}) ein Bestandteil des Abgases des Gasmotors ist.

Die sich durch die erfindungsgemäße Vorrichtung ergebenden Vorteile sind identisch mit den bereits gewürdigten Vorteilen der erfindungsgemäßen Verfahrensführung, so dass diese an dieser Stelle nicht wiederholt werden.

Des Weiteren wird auch ein stationäres Blockheizkraftwerk und/oder ein Fahrzeug, insbesondere ein Nutzfahrzeug, zur Durchführung des erfindungsgemäßen Verfahrens und/oder mit der erfindungsgemäßen Vorrichtung beansprucht. Die sich hieraus ergebenden Vorteile sind ebenfalls identisch mit den bereits gewürdigten Vorteile der erfindungsgemäßen Verfahrensführung, so dass diese hier ebenfalls nicht wiederholt werden.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Fig. 1: in einer schematischen Darstellung den Aufbau einer ersten Ausführungsform einer erfindungsgemäßen Vorrichtung;
- Fig. 2: in einer schematischen Darstellung den Aufbau eines SCR-Katalysatorelements der Vorrichtung;
- Fig. 3: in einer Darstellung gemäß Fig. 1 eine zweite Ausführungsform der Vorrichtung;
- Fig. 4: in einer Darstellung gemäß Fig. 1 eine dritte Ausführungsform der Vorrichtung;
- Fig. 5: in einer Darstellung gemäß Fig. 1 eine vierte Ausführungsform der Vorrichtung
- Fig. 6: in einer Darstellung gemäß Fig. 1 eine fünfte Ausführungsform der Vorrichtung;
- Fig. 7: in einer Darstellung gemäß Fig. 1 eine sechste Ausführungsform der Vorrichtung;
- Fig. 8: in einer Darstellung gemäß Fig. 1 eine siebte Ausführungsform der Vorrichtung; und
- Fig. 9: in einer Darstellung gemäß Fig. 1 eine achte Ausführungsform der Vorrichtung.

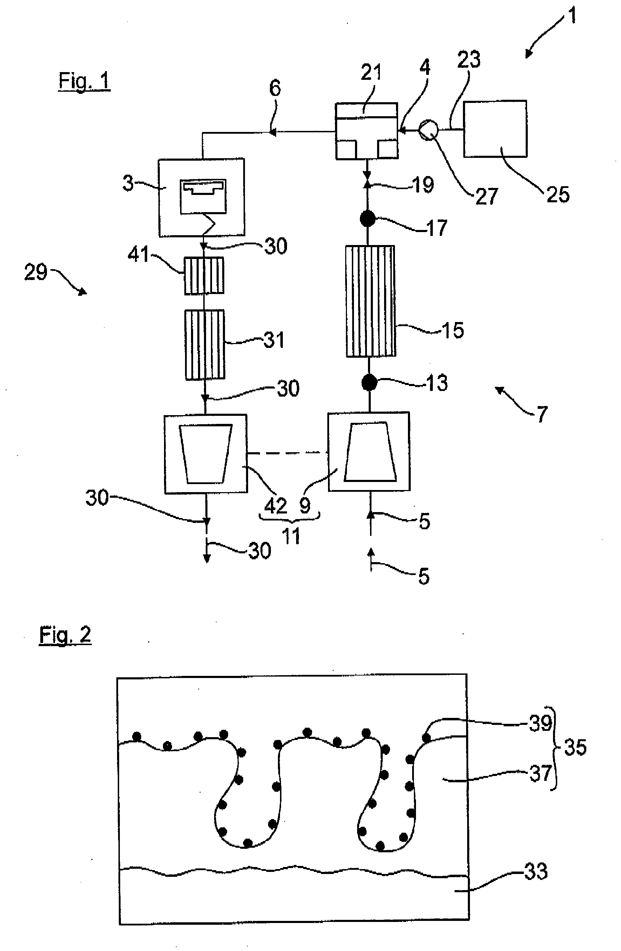

In Fig. 1 ist der Aufbau einer ersten Ausführungsform einer erfindungsgemäßen Vorrichtung 1 gezeigt. Die Vorrichtung 1 weist einen Gasmotor 3 auf, der mit einem kohlenstoffhaltigen Brenngas 4 als Kraftstoff betrieben wird. Das Brenngas 4 weist bevorzugt einen Methan-Anteil (CH₄) größer als 80% auf und kann beispielsweise durch Erdgas gebildet sein. Das Brenngas-Verbindungsluft-Gasgemisch 6 wird hier beispielhaft außerhalb des Gasmotors 3 bzw. extern gebildet.

Wie aus Fig. 1 hervorgeht, strömt während des Betriebs des Gasmotors 3 Verbrennungsluft 5 in einen Ansaugtrakt 7 der Vorrichtung 1 ein. Der Ansaugtrakt 7 weist, in Verbrennungsluft-Strömungsrichtung gesehen, einen Verdichter 9 eines Abgasturboladers 11, einen Drucksensor 13, einen Ladeluftkühler 15, einen Drucksensor 17, eine Drosselklappe 19 und eine Brenngas-Verbrennungsluft-Mischeinrichtung 21 auf. An die Brenngas-Verbrennungsluft-Mischeinrichtung 21 ist hier beispielhaft eine Zuführleitung 23 angeschlossen, mittels der das in einem Kraftstofftank 25 der Vorrichtung 1 gespeicherte Brenngas 4 der Brenngas-Verbrennungsluft-Mischeinrichtung 21 zugeführt wird. Das Brenngas 4 wird hier beispielhaft mittels einer Pumpe 27 ausgehend von dem Kraftstofftank 25 hin zu der Brenngas-Verbrennungsluft-Mischeinrichtung 21 gefördert.

Gemäß Fig. 1 weist die Vorrichtung 1 weiter auch einen Abgasstrang 29 auf, der von einem Abgas 30 des Gasmotors 3 durchströmt wird. Der Abgasstrang 29 weist ein SCR-Katalysatorelement 31 auf, mittels dem Stickoxide (NOₓ) des durch das SCR-Katalysatorelement 31 strömenden Abgases mit Kohlenwasserstoff (C_{y}H_{z}) als Reduktionsmittel verringert werden. Der durch das SCR-Katalysatorelement 31 strömende Kohlenwasserstoff ist hier Bestandteil des Abgases 30 des Gasmotors 3.

In Fig. 2 ist der Aufbau des SCR-Katalysatorelements 31 schematisch gezeigt. Das SCR-Katalysatorelement 31 weist ein Substrat bzw. einen Trägerkörper 33 auf, der mit einem Katalysatormaterial 35 beschichtet ist. Das Katalysatormaterial bzw. die Katalysatormaterialschicht 35 weist eine Trägerkomponente 37 und eine Aktivkomponente 39 auf. Als Aktivkomponente 39 enthält das Katalysatormaterial 39 vorzugsweise Silber und/oder Kupfer und/oder Platin und/oder Indium und/oder CeO₂ und/oder Kobalt und/oder Palladium. Als Trägerkomponente 37 enthält das Katalysatormaterial 35 vorzugsweise Al₂O₃ und/oder TiO₂ und/oder SiO₂ und/oder ZrO₂. Alternativ und/oder zusätzlich kann das Katalysatormaterial 39 auch Zeolith und/oder modifiziertes Zeolith aufweisen.

Gemäß Fig. 1 weist der Abgasstrang 29 hier beispielhaft auch ein, in Abgas-Strömungsrichtung gesehen, zwischen dem Gasmotor 3 und dem SCR-Katalysatorelement 31 angeordnetes Oxidationskatalysatorelement 41 auf. Zudem ist eine Abgasturbine 42 des Abgasturboladers 11 hier beispielhaft, in Abgas-Strömungsrichtung gesehen, stromab des SCR-Katalysatorelements 31 in oder an dem Abgasstrang 29 angeordnet.

Des Weiteren wird der Gasmotor 3 hier beispielhaft mit einem Brenngas-Luft-Gasgemisch betrieben, das einen Luftzahl-Wert (Lambda) von 1,2 bis 1,6 aufweist. Zudem liegt der Zündzeitpunkt des Gasmotors 3 hier beispielhaft in einem Kurbelwinkelbereich von 40° Kurbelwinkel vor OT (oberer Totpunkt) bis 10° Kurbelwinkel vor OT. Weiter liegt der Schließzeitpunkt der hier beispielhaft zwei Einlassventile des Gasmotors 3 hier beispielhaft in einem Kurbelwinkelbereich von 50° Kurbelwinkel vor UT (unterer Totpunkt) bis 10° Kurbelwinkel vor UT. Zudem weist die Ventilüberschneidung der der Einlassventile des Gasmotors 3 und der hier beispielhaft zwei Auslassventile des Gasmotors 3 hier beispielhaft einen Ventilüberschneidungs-Wert von 0° bis 50° Kurbelwinkel auf. Durch diese Betriebsweise des Gasmotors 3 wird in Kombination mit dem SCR-Katalysatorelement 31 des Abgasstrangs 29 ein besonders hoher Wirkungsgrad des Gasmotors 3 und eine effektive Reduzierung der in dem Abgas des Gasmotors 3 enthaltenen Schadstoffe erreicht.

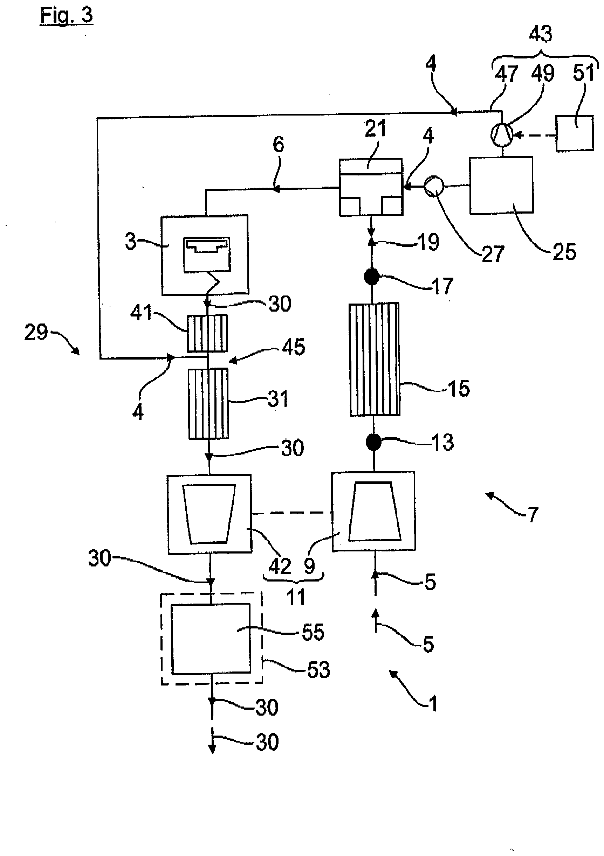

In Fig. 3 ist eine zweite Ausführungsform der Vorrichtung 1 gezeigt. Im Gegensatz zu der in Fig. 1 gezeigten ersten Ausführungsform weist die zweite Ausführungsform der Vorrichtung 1 eine Fördereinrichtung 43 auf, mittels der das in dem Kraftstofftank 25 gespeicherte Brenngas 4 an einem Brenngas-Einleitbereich 45 des Abgasstrangs 29 in den Abgasstrang 29 gefördert werden kann. Der Brenngas-Einleitbereich 45 des Abgasstrangs 29 ist hier beispielhaft, in Abgas-Strömungsrichtung gesehen, zwischen dem Oxidationskatalystorelement 41 und dem SCR-Katalysatorelement 31 angeordnet. Die Fördereinrichtung 43 weist hier beispielhaft eine Verbindungsleitung 47 auf, mittels der der Kraftstofftank 25 und der Abgasstrang 29 strömungstechnisch miteinander verbunden sind. Zudem weist die Fördereinrichtung 43 hier beispielhaft auch eine Pumpe 49 auf, mittels der das Brenngas 4 durch die Verbindungsleitung 47 gefördert wird. Die Pumpe 49 wird hier beispielhaft mittels einer Regel- und/oder Steuereinrichtung 51 der Fördereinrichtung 43 geregelt bzw. gesteuert. Mittels der Fördereinrichtung 43 wird hier beispielhaft Brenngas 4 in den Abgasstrang 29 gefördert, wenn die in dem Abgas 30 des Gasmotors 3 enthaltenen Kohlenwasserstoffe nicht ausreichen, um die Stickoxide des Abgases 30 in dem erforderlichen Maß zu reduzieren. Somit wird mittels der Fördereinrichtung 30 eine hohe Umsetzungsrate bzw. eine hohe Konvertierungsrate der in dem Abgas 30 enthaltenen Stickoxide zuverlässig sichergestellt.

Wie in Fig. 3 weiter gezeigt ist, weist die zweite Ausführungsform der Vorrichtung 1 weiter auch eine Energie-Rückgewinnungseinrichtung 53 auf, mittels der aus der Wärmeenergie des Abgases 30 nutzbare Energie rückgewonnen bzw. erzeugt werden kann. Die Rückgewinnung der Energie kann dabei beispielsweise mittels eines thermodynamischen Kreisprozesses, beispielsweise mittels des Clausius-Rankine-Kreisprozesses, erfolgen. Die Energie-Rückgewinnungseinrichtung 53 weist einen wärmeaufnehmenden Wärmeübertrager 55 auf, mittels dem die Wärmeenergie des Abgases 30 aufgenommen wird. Der wärmeaufnehmende Wärmeübertrager 55 ist hier beispielhaft, in Abgas-Strömungsrichtung gesehen, stromab der Abgasturbine 42 des Abgasturboladers 11 in oder an dem Abgasstrang 29 angeordnet.

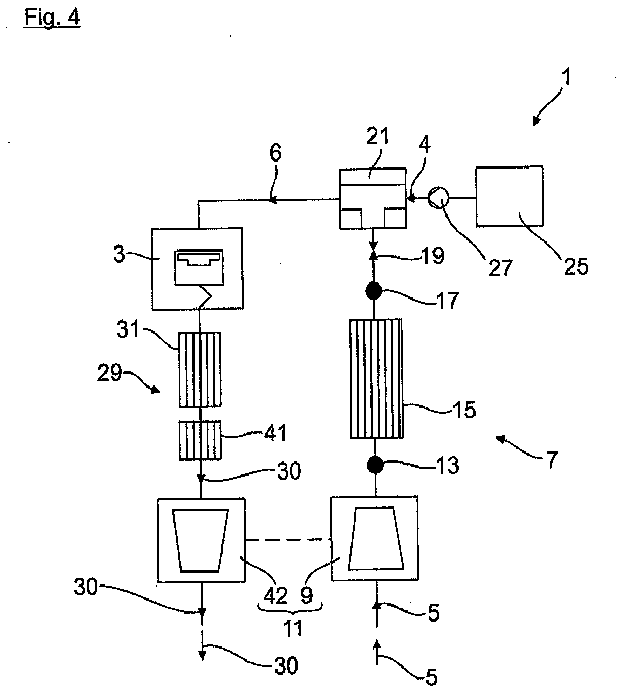

In Fig. 4 ist eine dritte Ausführungsform der Vorrichtung 1 gezeigt. Im Vergleich zu der in Fig. 1 gezeigten ersten Ausführungsform ist der Oxidationskatalysator 41 hier, in Abgas-Strömungsrichtung gesehen, stromab des SCR-Katalysatorelements 31 in oder an dem Abgasstrang 29 angeordnet.

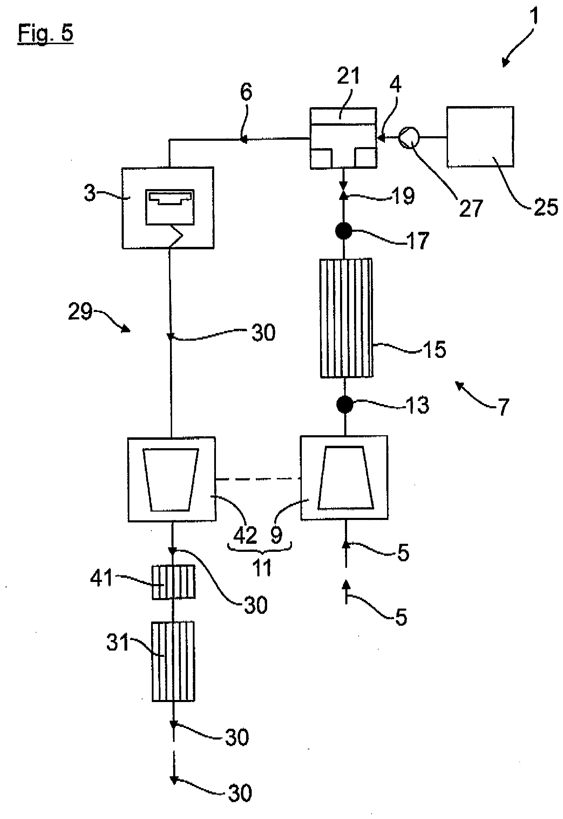

In Fig. 5 ist eine vierte Ausführungsform der Vorrichtung 1 gezeigt. Im Vergleich zu der in Fig. 1 gezeigten ersten Ausführungsform sind das SCR-Katalysatorelement 31 und das Oxidationskatalysatorelement 41 hier, in Abgas-Strömungsrichtung gesehen, stromab der Abgasturbine 42 des Abgasturboladers in oder an dem Abgasstrang 29 angeordnet.

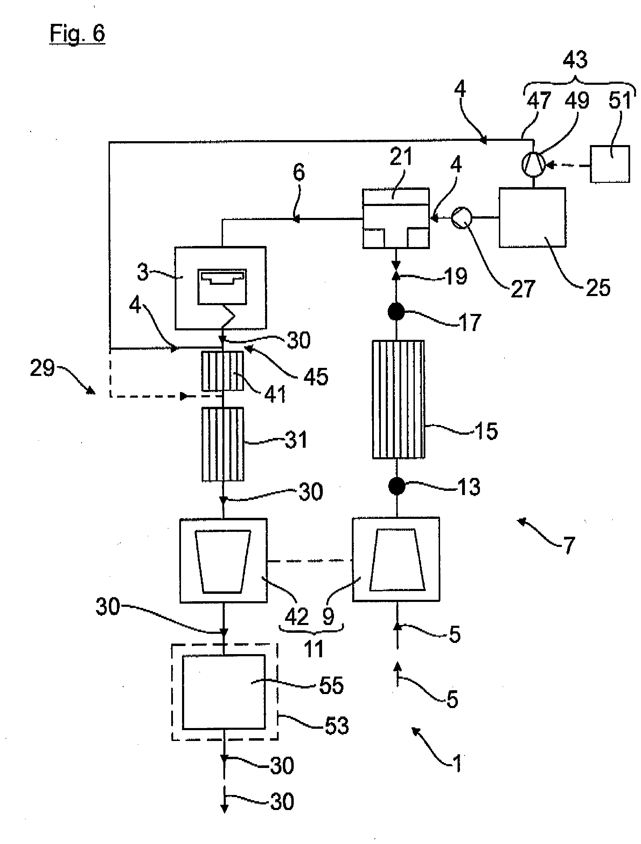

In Fig. 6 ist eine fünfte Ausführungsform der Vorrichtung 1 gezeigt. Im Vergleich zu der in Fig. 3 gezeigten zweiten Ausführungsform ist der Brenngas-Einleitbereich 45 des Abgasstrangs 29 hier, in Abgas-Strömungsrichtung gesehen, zwischen dem Gasmotor 3 und dem Oxidationskatalysatorelement 41 angeordnet. Wie in Fig. 6 mit gestrichelten Linien angedeutet, könnte das Brenngas 4 zusätzlich auch, in Abgas-Strömungsrichtung gesehen, zwischen dem Oxidationskatalysatorelement 41 und dem SCR-Katalysatorelement 31 mittels der Fördereinrichtung 43 in den Abgasstrang 29 eingeleitet werden.

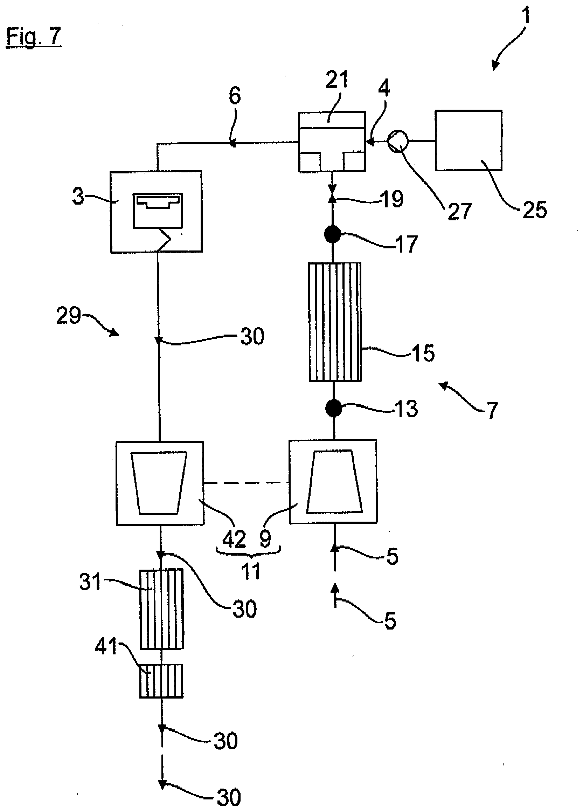

In Fig. 7 ist eine sechste Ausführungsform der Vorrichtung 1 gezeigt. Im Vergleich zu der in Fig. 5 gezeigten vierten Ausführungsform ist das Oxidationskatalysatorelement 41 hier, in Abgas-Strömungsrichtung gesehen, stromab des SCR-Katalysatorelements 31 in oder an dem Abgasstrang 29 angeordnet.

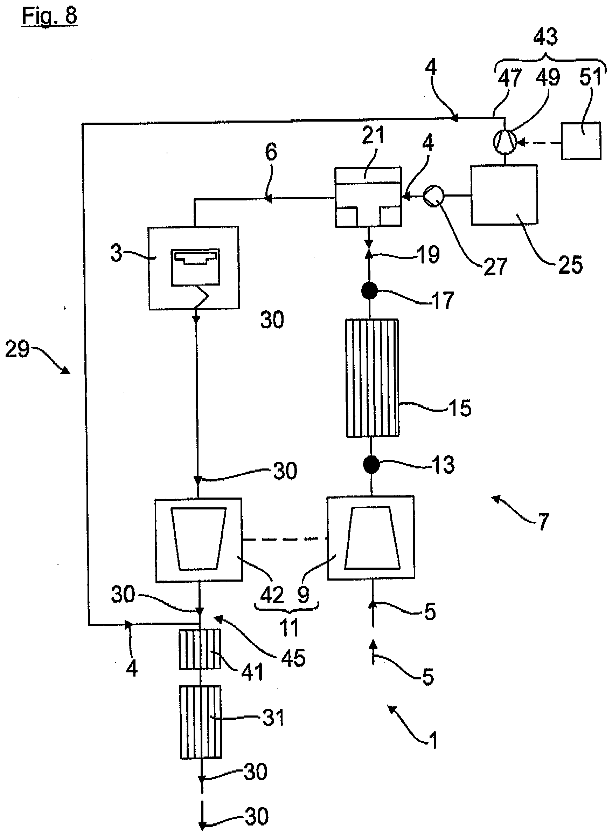

In Fig. 8 ist eine siebte Ausführungsform der Vorrichtung 1 gezeigt. Im Vergleich zu der in Fig. 5 gezeigten vierten Ausführungsform weist die Vorrichtung 1 hier zusätzlich die Fördereinrichtung 43 auf. Der Abgas-Einleitbereich 45 ist hier beispielhaft, in Abgas-Strömungsrichtung gesehen, zwischen der Abgasturbine 42 und dem Oxidationskatalysatorelement 41 angeordnet.

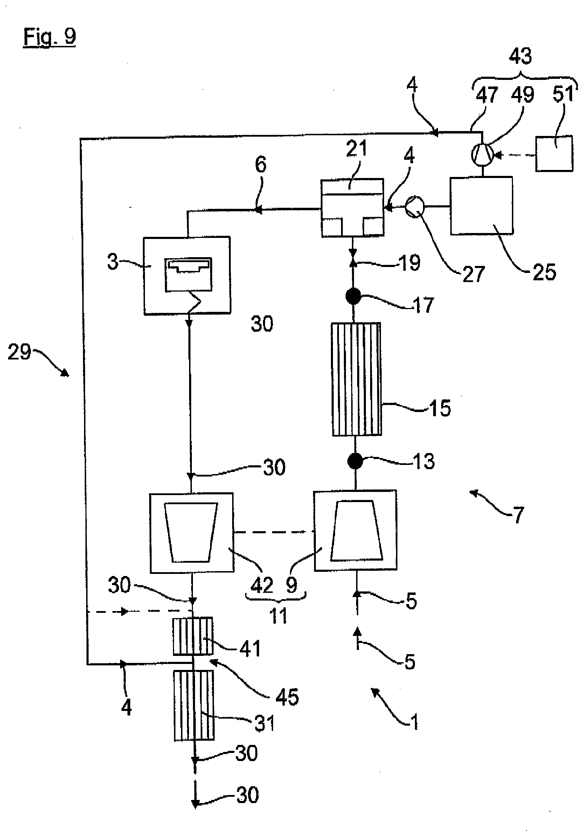

In Fig. 9 ist eine achte Ausführungsform der Vorrichtung 1 gezeigt. Im Vergleich zu der in Fig. 8 gezeigten siebten Ausführungsform ist der Brenngas-Einleitbereich 45 des Abgasstrangs 29 hier, in Abgas-Strömungsrichtung gesehen, zwischen dem Oxidationskatalysatorelement 41 und dem SCR-Katalysatorelement 31 angeordnet. Wie in Fig. 9 mit gestrichelten Linien angedeutet, könnte das Brenngas 4 zusätzlich auch, in Abgas-Strömungsrichtung gesehen, zwischen der Abgasturbine 42 und dem Oxidationskatalysatorelement 41 mittels der Fördereinrichtung 43 in den Abgasstrang 29 eingeleitet werden.

### Bezugszeichenliste

- 1: Vorrichtung
- 3: Gasmotor
- 4: Brenngas
- 5: Verbrennungsluft
- 6: Brenngas- Verbrennungsluft-Gasgemisch
- 7: Ansaugtrakt
- 9: Verdichter
- 11: Abgasturbolader
- 13: Drucksensor
- 15: Ladeluftkühler
- 17: Drucksensor
- 19: Drosselklappe
- 21: Brenngas-Verbrennungsluft-Mischeinrichtung
- 23: Zuführleitung
- 25: Kraftstofftank
- 27: Pumpe
- 29: Abgasstrang
- 30: Abgas
- 31: SCR-Katalysatorelement
- 33: Trägerkörper
- 35: Katalysatormaterial
- 37: Trägerkomponente
- 39: Aktivkomponente
- 41: Oxidationskatalysatorelement
- 42: Abgasturbine
- 43: Fördereinrichtung
- 45: Brenngas-Einleitbereich
- 47: Förderleitung
- 49: Pumpe
- 51: Regel- und/oder Steuereinrichtung
- 53: Energie-Rückgewinnungseinrichtung
- 55: wärmeaufnehmender Wärmeübertrager

## Patentansprüche

1. Verfahren zum Betreiben eines Gasmotors mit externer Gemischbildung, wobei ein sich an den Gasmotor (3) anschließender Abgasstrang (29) vorgesehen ist, der von dem Abgas (30) des Gasmotors (3) durchströmt wird, wobei der Abgasstrang wenigstens eine Abgasturbine eines Abgasturboladers aufweist,
wobei der Gasmotor (3) mit einem mageren Brenngas-Luft-Gasgemisch (6) betrieben wird, wobei der Gasmotor (3) nach einem Miller-Kreisprozess betrieben wird,
wobei der Abgasstrang (29) wenigstens ein SCR-Katalysatorelement (31) aufweist, mittels dem Stickoxide (NOₓ) des durch das SCR-Katalysatorelement (31) strömenden Abgases (30) mit Kohlenwasserstoff (C_{y}H_{z}) als Reduktionsmittel verringert werden, wobei zumindest ein Teil des durch das SCR-Katalysatorelement (31) strömenden Kohlenwasserstoffs (C_{y}H_{z}) ein Bestandteil des Abgases (30) des Gasmotors (3) ist,
wobei der Zündzeitpunkt des Gasmotors (3) in einem Kurbelwinkelbereich von 30° Kurbelwinkel vor OT bis 15° Kurbelwinkel vor OT liegt, und
wobei die Ventilüberschneidung des wenigstens einen Einlassventils des Gasmotors (3) und des wenigstens einen Auslassventils des Gasmotors (3) einen Ventilüberschneidungs-Wert von 30° Kurbelwinkel bis 50° Kurbelwinkel aufweist.

2. Verfahren nach Anspruch 1, **dadurch gekennzeichnet, dass** der Gasmotor (3) mit einem Brenngas-Luft-Gasgemisch (6) betrieben wird, das einen Luftzahl-Wert (Lambda) von 1,2 bis 1,6 aufweist.

3. Verfahren nach Anspruch 1 oder 2, **dadurch gekennzeichnet, dass** der Schließzeitpunkt des wenigstens einen Einlassventils des Gasmotors (3) in einem Kurbelwinkelbereich von 45° Kurbelwinkel vor UT bis 20° Kurbelwinkel vor UT liegt.

4. Verfahren nach einem der vorhergehenden Ansprüche, **dadurch gekennzeichnet, dass** der Gasmotor (3) mit einem Brenngas (4) betrieben wird, das einen Methan-Anteil (CH₄) größer als 40 Vol.%, bevorzugt größer als 60 Vol.%, besonders bevorzugt größer als 80 Vol.% aufweist, wobei bevorzugt vorgesehen ist, dass das Brenngas (4) zumindest teilweise durch Erdgas und/oder durch Biogas gebildet ist.

5. Verfahren nach einem der vorhergehenden Ansprüche, **dadurch gekennzeichnet, dass** der Abgasstrang (29) wenigstens eine Abgasturbine (42) eines Abgasturboladers (11) aufweist, wobei bevorzugt vorgesehen ist, dass das wenigstens eine SCR-Katalysatorelement (31), in Abgas-Strömungsrichtung gesehen, stromauf und/oder stromab der Abgasturbine (42) an oder in dem Abgasstrang (29) angeordnet ist.

6. Verfahren nach einem der vorhergehenden Ansprüche, **dadurch gekennzeichnet, dass** eine Energie-Rückgewinnungseinrichtung (53) vorgesehen ist, mittels der aus der Wärmeenergie des Abgases (30) nutzbare Energie rückgewinnbar und/oder erzeugbar ist, wobei die Energie-Rückgewinnungseinrichtung (53) wenigstens einen wärmeaufnehmenden Wärmeübertrager (55) aufweist, mittels dem die Wärmenergie des Abgases (30) aufnehmbar ist, wobei bevorzugt vorgesehen ist, dass der wenigstens eine wärmeaufnehmende Wärmeübertrager (30), in Abgas-Strömungsrichtung gesehen, stromab des SCR-Katalysatorelements (31) an oder in dem Abgasstrang (29) angeordnet ist.

7. Verfahren nach einem der vorhergehenden Ansprüche, **dadurch gekennzeichnet, dass** der Abgasstrang (29) wenigstens ein Oxidationskatalysatorelement (41) aufweist, wobei bevorzugt vorgesehen ist, dass das wenigstens eine Oxidationskatalysatorelement (41), in Abgas-Strömungsrichtung gesehen, stromauf und/oder stromab des SCR-Katalysatorelements (31) an oder in dem Abgasstrang (29) angeordnet ist.

8. Verfahren nach Anspruch 7, **dadurch gekennzeichnet, dass** das SCR-Katalysatorelement (31) und das Oxidationskatalysatorelement (41) durch ein einziges Katalysatorelement gebildet sind, wobei bevorzugt vorgesehen ist, dass ein Trägerkörper des Katalysatorelements mit einem Katalysatormaterial beschichtet ist, das sowohl eine stickoxidreduzierende und eine oxidierende Wirkung aufweist.

9. Verfahren nach einem der vorhergehenden Ansprüche, **dadurch gekennzeichnet, dass** das eine Fördereinrichtung (43) vorgesehen ist, mittels der das in einem Kraftstofftank (25) gespeicherte Brenngas (4) an einem Brenngas-Einleitbereich (45) des Abgasstrangs (29) in den Abgasstrang (29) gefördert wird, wobei der Brenngas-Einleitbereich (45), in Abgas-Strömungsrichtung gesehen, stromab eines Abgas-Einströmbereichs, an dem das Abgas (30) des Gasmotors (3) in den Abgasstrang (29) einströmt, und stromauf des SCR-Katalysatorelements (31) an dem Abgasstrang (29) angeordnet ist, wobei bevorzugt vorgesehen ist, dass eine Regel- und/oder Steuereinrichtung (51) vorgesehen ist, mittels der die Menge des mittels der Fördereinrichtung (43) geförderten Brenngases (4) geregelt und/oder gesteuert wird.

10. Verfahren nach einem der vorhergehenden Ansprüche, **dadurch gekennzeichnet, dass** das Katalysatormaterial (35) des SCR-Katalysatorelements (31) als Aktivkomponente (39) Silber und/oder Kupfer und/oder Platin und/oder Indium und/oder CeO₂ und/oder Kobalt und/oder Palladium enthält, und/oder dass das Katalysatormaterial (35) des SCR-Katalysatorelements (31) als Trägerkomponente (37) Al₂O₃ und/oder TiO₂ und/oder SiO₂ und/oder ZrO₂ enthält.

11. Verfahren nach einem der vorhergehenden Ansprüche, **dadurch gekennzeichnet, dass** eine Katalysatormaterialschicht (35) des SCR-Katalysatorelements (31) zumindest bereichsweise aus Ag-Al₂O₃, vorzugsweise aus Ag-Al₂O₃ mit 1 bis 3 Gew.% Ag, besteht, und/oder dass eine Katalysatormaterialschicht (35) des SCR-Katalysatorelements (31) zumindest bereichsweise aus Pt/In-ZSM-5 oder aus CeO2-In-ZSM oder aus Co-ZSM-5 besteht, und/oder dass eine Katalysatormaterialschicht (35) des SCR-Katalysatorelements (31) zumindest bereichsweise aus Cu-Al₂O₃, vorzugsweise aus Cu-Al₂O₃ mit 6 bis 10 Gew.% Cu, besteht, und/oder dass eine Katalysatormaterialschicht (35) des SCR-Katalysatorelements (31) zumindest bereichsweise aus Pd-ZrO₂, vorzugsweise aus Pd-ZrO₂ mit 0,1 bis 0,5 Gew.% Pd, besteht.

12. Vorrichtung zur Durchführung eines Verfahrens nach einem der vorhergehenden Ansprüche, mit einem Gasmotor (3) mit externer Gemischbildung, mit einem sich an den Gasmotor (3) anschließenden Abgasstrang (29), der von dem Abgas (30) des Gasmotors (3) durchströmt wird, wobei der Abgasstrang wenigstens eine Abgasturbine eines Abgasturboladers aufweist,
wobei der Gasmotor (3) mit einem mageren Brenngas-Luft-Gasgemisch (6) betreibbar ist, wobei der Gasmotor (3) nach einem Miller-Kreisprozess betreibbar ist,
wobei der Abgasstrang (29) wenigstens ein SCR-Katalysatorelement (31) aufweist, mittels dem Stickoxide (NOₓ) des durch das SCR-Katalysatorelement (31) strömenden Abgases (30) mit Kohlenwasserstoff (C_{y}H_{z}) als Reduktionsmittel verringerbar sind, wobei zumindest ein Teil des durch das SCR-Katalysatorelement (31) strömenden Kohlenwasserstoffs (C_{y}H_{z}) ein Bestandteil des Abgases (30) des Gasmotors (3) ist,
wobei der Zündzeitpunkt des Gasmotors (3) in einem Kurbelwinkelbereich von 30° Kurbelwinkel vor OT bis 15° Kurbelwinkel vor OT liegt, und
wobei die Ventilüberschneidung des wenigstens einen Einlassventils des Gasmotors (3) und des wenigstens einen Auslassventils des Gasmotors (3) einen Ventilüberschneidungs-Wert von 30° Kurbelwinkel bis 50° Kurbelwinkel aufweist.

13. Stationäres Blockheizkraftwerk und/oder Fahrzeug, insbesondere Nutzfahrzeug, zur Durchführung eines Verfahrens nach einem der Ansprüche 1 bis 11 und/oder mit einer Vorrichtung nach Anspruch 12.

## Claims

1. Method for operating a gas engine with external mixture formation, wherein an exhaust line (29) adjoining the gas engine (3), through which the exhaust gas (30) of the gas engine (3) flows, is provided,
wherein the exhaust line has at least one exhaust turbine of an exhaust turbocharger, wherein the gas engine (3) is operated with a lean fuel gas/air gas mixture (6), wherein the gas engine (3) is operated in accordance with a Miller cycle,
wherein the exhaust line (29) has at least one SCR catalyst element (31), by means of which the level of nitrogen oxides (NOₓ) in the exhaust gas (30) flowing through the SCR catalyst element (31) is lowered using hydrocarbons (C_{y}H_{z}) as a reducing agent, wherein at least some of the hydrocarbons (C_{y}H_{z}) flowing through the SCR catalyst element (31) are constituents of the exhaust gas (30) of the gas engine (3),
wherein the ignition point of the gas engine (3) is in a crank angle range of from 30° of crank angle before TDC to 15° of crank angle before TDC, and
wherein the valve overlap between the at least one intake valve of the gas engine (3) and the at least one exhaust valve of the gas engine (3) has a valve overlap value of from 30° of crank angle to 50° of crank angle.

2. Method according to Claim 1, **characterized in that** the gas engine (3) is operated with a fuel gas/air gas mixture (6) which has an air/fuel ratio (lambda) of 1.2 to 1.6.

3. Method according to Claim 1 or 2, **characterized in that** the closing point of the at least one intake valve of the gas engine (3) is in a crank angle range of from 45° of crank angle before BDC to 20° of crank angle before BDC.

4. Method according to one of the preceding claims, **characterized in that** the gas engine (3) is operated with a fuel gas (4) which has a methane content (CH₄) greater than 40% by volume, preferably greater than 60% by volume, particularly preferably greater than 80% by volume, wherein provision is preferably made for the fuel gas (4) to be formed at least partially by natural gas and/or by biogas.

5. Method according to one of the preceding claims, **characterized in that** the exhaust line (29) has at least one exhaust turbine (42) of an exhaust turbocharger (11), wherein provision is preferably made for the at least one SCR catalyst element (31) to be arranged on or in the exhaust line (29) upstream and/or downstream of the exhaust turbine (42), as viewed in the direction of flow of the exhaust gas.

6. Method according to one of the preceding claims, **characterized in that** an energy recovery device (53) is provided, by means of which useful energy can be recovered and/or generated from the thermal energy of the exhaust gas (30), wherein the energy recovery device (53) has at least one heating-absorbing heat exchanger (55), by means of which the thermal energy of the exhaust gas (30) can be absorbed, wherein provision is preferably made for the at least one heating-absorbing heat exchanger (30) to be arranged on or in the exhaust line (29) downstream of the SCR catalyst element (31), as viewed in the direction of flow of the exhaust gas.

7. Method according to one of the preceding claims, **characterized in that** the exhaust line (29) has at least one oxidation catalyst element (41), wherein provision is preferably made for the at least one oxidation catalyst element (41) to be arranged on or in the exhaust line (29) upstream and/or downstream of the SCR catalyst element (31), as viewed in the direction of flow of the exhaust gas.

8. Method according to Claim 7, **characterized in that** the SCR catalyst element (31) and the oxidation catalyst element (41) are formed by a single catalyst element, wherein provision is preferably made for a substrate of the catalyst element to be coated with a catalyst material which has both a nitrogen-oxide-reducing and an oxidizing effect.

9. Method according to one of the preceding claims, **characterized in that** a delivery device (43), by means of which the fuel gas (4) stored in a fuel tank (25) is delivered into the exhaust line (29) in a fuel-gas inlet region (45) of the exhaust line (29), is provided, wherein the fuel-gas inlet region (45) is arranged on the exhaust line (29) downstream of an exhaust-gas inflow region, at which the exhaust gas (30) of the gas engine (3) flows into the exhaust line (29), and upstream of the SCR catalyst element (31), as viewed in the direction of flow of the exhaust gas, wherein provision is preferably made to provide a closed-loop and/or open-loop control device (51), by means of which the quantity of fuel gas (4) delivered by means of the delivery device (43) is subjected to closed-loop and/or open-loop control.

10. Method according to one of the preceding claims, **characterized in that** the catalyst material (35) of the SCR catalyst element (31) contains silver and/or copper and/or platinum and/or indium and/or CeO₂ and/or cobalt and/or palladium as the active component (39), and/or **in that** the catalyst material (35) of the SCR catalyst element (31) contains Al₂O₃ and/or TiO₂ and/or SiO₂ and/or ZrO₂ as a supporting component (37).

11. Method according to one of the preceding claims, **characterized in that** a catalyst material layer (35) of the SCR catalyst element (31) is composed at least in part of Ag-Al₂O₃, preferably of Ag-Al₂O₃ containing 1 to 3% by weight of Ag, and/or **in that** a catalyst material layer (35) of the SCR catalyst element (31) is composed at least in part of Pt/In-ZSM-5 or of CeO2-In-ZSM or of Co-ZSM-5, and/or **in that** a catalyst material layer (35) of the SCR catalyst element (31) is composed at least in part of Cu-Al₂O₃, preferably of Cu-Al₂O₃ containing 6 to 10% by weight of Cu, and/or **in that** a catalyst material layer (35) of the SCR catalyst element (31) is composed at least in part of Pd-ZrO₂, preferably of Pd-ZrO₂ containing 0.1 to 0.5% by weight of Pd.

12. Apparatus for carrying out a method according to one of the preceding claims, having a gas engine (3) with external mixture formation, with an exhaust line (29) adjoining the gas engine (3), through which the exhaust gas (30) of the gas engine (3) flows, wherein the exhaust line has at least one exhaust turbine of an exhaust turbocharger,
wherein the gas engine (3) can be operated with a lean fuel gas/air gas mixture (6), wherein the gas engine (3) can be operated in accordance with a Miller cycle,
wherein the exhaust line (29) has at least one SCR catalyst element (31), by means of which the level of nitrogen oxides (NOx) in the exhaust gas (30) flowing through the SCR catalyst element (31) can be lowered using hydrocarbons (C_{y}H_{z}) as a reducing agent, wherein at least some of the hydrocarbons (C_{y}H_{z}) flowing through the SCR catalyst element (31) are constituents of the exhaust gas (30) of the gas engine (3),
wherein the valve overlap between the at least one intake valve of the gas engine (3) and the at least one exhaust valve of the gas engine (3) has a valve overlap value of from 30° of crank angle to 50° of crank angle.

13. Stationary cogeneration unit and/or vehicle, in particular commercial vehicle, for carrying out a method according to one of Claims 1 to 11 and/or with an apparatus according to Claim 12.

## Revendications

1. Procédé destiné au fonctionnement d'un moteur à gaz à formation de mélange externe, une ligne d'échappement (29) se raccordant au moteur à gaz (3) étant prévue, laquelle est traversée par les gaz d'échappement (30) du moteur à gaz (3), la ligne d'échappement comprenant au moins une turbine à gaz d'échappement d'un turbocompresseur à gaz d'échappement,
le moteur à gaz (3) fonctionnant avec un mélange gaz combustible-air (6) pauvre, le moteur à gaz (3) fonctionnant suivant un cycle de Miller,
la ligne d'échappement (29) comprenant au moins un élément de catalyseur SCR (réduction catalytique sélective) (31), au moyen duquel les oxydes d'azote (NOx) des gaz d'échappement (30) s'écoulant à travers l'élément de catalyseur SCR (31) sont réduits à l'aide d'hydrocarbures (C_{y}H_{z}) en tant qu'agent réducteur, au moins une partie des hydrocarbures (C_{y}H_{z}) s'écoulant à travers l'élément de catalyseur SCR (31) faisant partie des gaz d'échappement (30) du moteur à gaz (3),
le point d'allumage du moteur à gaz (3) se situant dans une plage d'angles de vilebrequin de 30° d'angle de vilebrequin avant le point mort haut (PMH) à 15° d'angle de vilebrequin avant le PMH, et
le chevauchement de soupapes entre l'au moins une soupape d'admission du moteur à gaz (3) et l'au moins une soupape d'échappement du moteur à gaz (3) présentant une valeur de chevauchement de soupapes de 30° d'angle de vilebrequin à 50° d'angle de vilebrequin.

2. Procédé selon la revendication 1, **caractérisé en ce que** le moteur à gaz (3) fonctionne avec un mélange gaz combustible-air (6) qui présente une valeur de coefficient d'air (lambda) de 1,2 à 1,6.

3. Procédé selon la revendication 1 ou 2, **caractérisé en ce que** le point de fermeture de l'au moins une soupape d'admission du moteur à gaz (3) se situe dans une plage d'angles de vilebrequin de 45° d'angle de vilebrequin avant le point mort bas (PMB) à 20° d'angle de vilebrequin avant le PMB.

4. Procédé selon l'une des revendications précédentes, **caractérisé en ce que** le moteur à gaz (3) fonctionne avec un gaz combustible (4) qui présente une proportion de méthane (CH₄) supérieure à 40 % en volume, de préférence supérieure à 60 % en volume, de manière particulièrement préférée supérieure à 80 % en volume, le gaz combustible (4) étant de préférence formé au moins partiellement par du gaz naturel et/ou du biogaz.

5. Procédé selon l'une des revendications précédentes, **caractérisé en ce que** la ligne d'échappement (29) comprend au moins une turbine à gaz d'échappement (42) d'un turbocompresseur à gaz d'échappement (11), ledit au moins un élément de catalyseur SCR (31) étant de préférence disposé, vu dans le sens d'écoulement des gaz d'échappement, en amont et/ou en aval de la turbine à gaz d'échappement (42) sur ou dans la ligne d'échappement (29).

6. Procédé selon l'une des revendications précédentes, **caractérisé en ce qu'**un dispositif de récupération d'énergie (53) est prévu, au moyen duquel de l'énergie utile peut être récupérée et/ou produite à partir de l'énergie thermique des gaz d'échappement (30), le dispositif de récupération d'énergie (53) comprenant au moins un échangeur de chaleur (55) absorbant de la chaleur au moyen duquel l'énergie thermique des gaz d'échappement (30) peut être absorbée, ledit au moins un échangeur de chaleur (30) absorbant de la chaleur étant de préférence disposé, vu dans le sens d'écoulement des gaz d'échappement, en aval de l'élément de catalyseur SCR (31) sur ou dans la ligne d'échappement (29).

7. Procédé selon l'une des revendications précédentes, **caractérisé en ce que** la ligne d'échappement (29) comprend au moins un élément de catalyseur d'oxydation (41), ledit au moins un élément de catalyseur d'oxydation (41) étant de préférence disposé, vu dans le sens d'écoulement des gaz d'échappement, en amont et/ou en aval de l'élément de catalyseur SCR (31) sur ou dans la ligne d'échappement (29).

8. Procédé selon la revendication 7, **caractérisé en ce que** l'élément de catalyseur SCR (31) et l'élément de catalyseur d'oxydation (41) sont formés par un élément de catalyseur unique, un corps de support de l'élément de catalyseur étant de préférence revêtu d'un matériau catalyseur qui présente à la fois un effet de réduction des oxydes d'azote et un effet d'oxydation.

9. Procédé selon l'une des revendications précédentes, **caractérisé en ce qu'**un dispositif de refoulement (43) est prévu, au moyen duquel le gaz combustible (4) stocké dans un réservoir de carburant (25) est refoulé dans la ligne d'échappement (29) au niveau d'une région d'entrée de gaz combustible (45) de la ligne d'échappement (29), la région d'entrée de gaz combustible (45) étant disposée, vue dans le sens d'écoulement des gaz d'échappement, sur la ligne d'échappement (29) en aval d'une région d'afflux de gaz d'échappement au niveau de laquelle les gaz d'échappement (30) du moteur à gaz (3) affluent dans la ligne d'échappement (29), et en amont de l'élément de catalyseur SCR (31), un dispositif de régulation et/ou de commande (51) étant de préférence prévu, au moyen duquel la quantité du gaz combustible (4) refoulé au moyen du dispositif de refoulement (43) est régulée et/ou commandée.

10. Procédé selon l'une des revendications précédentes, **caractérisé en ce que** le matériau catalyseur (35) de l'élément de catalyseur SCR (31) contient, en tant que composant actif (39), de l'argent et/ou du cuivre et/ou du platine et/ou de l'indium et/ou du CeO₂ et/ou du cobalt et/ou du palladium, et/ou **en ce que** le matériau catalyseur (35) de l'élément de catalyseur SCR (31) contient, en tant que composant de support (37), Al₂O₃ et/ou TiO₂ et/ou SiO₂ et/ou ZrO₂.

11. Procédé selon l'une des revendications précédentes, **caractérisé en ce qu'**une couche de matériau catalyseur (35) de l'élément de catalyseur SCR (31) est constituée, au moins dans certaines régions, de Ag-Al₂O₃, de préférence de Ag-Al₂O₃ contenant 1 à 3 % en poids de Ag, et/ou **en ce qu'**une couche de matériau catalyseur (35) de l'élément de catalyseur SCR (31) est constituée, au moins dans certaines régions, de Pt/In-ZSM-5 ou de CeO₂-In-ZSM ou de Co-ZSM-5, et/ou **en ce qu'**une couche de matériau catalyseur (35) de l'élément de catalyseur SCR (31) est constituée, au moins dans certaines régions, de Cu-Al₂O₃, de préférence de Cu-Al₂O₃ contenant 6 à 10 % en poids de Cu, et/ou **en ce qu'**une couche de matériau catalyseur (35) de l'élément de catalyseur SCR (31) est constituée, au moins dans certaines régions, de Pd-ZrO₂, de préférence de Pd-ZrO₂ contenant 0,1 à 0,5 % en poids de Pd.

12. Dispositif permettant de mettre en oeuvre un procédé selon l'une des revendications précédentes, comprenant un moteur à gaz (3) à formation de mélange externe, comprenant une ligne d'échappement (29) se raccordant au moteur à gaz (3), laquelle est traversée par les gaz d'échappement (30) du moteur à gaz (3), la ligne d'échappement comprenant au moins une turbine à gaz d'échappement d'un turbocompresseur à gaz d'échappement,
le moteur à gaz (3) pouvant fonctionner avec un mélange gaz combustible-air (6) pauvre, le moteur à gaz (3) pouvant fonctionner suivant un cycle de Miller,
la ligne d'échappement (29) comprenant au moins un élément de catalyseur SCR (31), au moyen duquel les oxydes d'azote (NOₓ) des gaz d'échappement (30) s'écoulant à travers l'élément de catalyseur SCR (31) peuvent être réduits à l'aide d'hydrocarbures (C_{y}H_{z}) en tant qu'agent réducteur, au moins une partie des hydrocarbures (C_{y}H_{z}) s'écoulant à travers l'élément de catalyseur SCR (31) faisant partie des gaz d'échappement (30) du moteur à gaz (3),
le point d'allumage du moteur à gaz (3) se situant dans une plage d'angles de vilebrequin de 30° d'angle de vilebrequin avant le PMH à 15° d'angle de vilebrequin avant le PMH, et
le chevauchement de soupapes entre l'au moins une soupape d'admission du moteur à gaz (3) et l'au moins une soupape d'échappement du moteur à gaz (3) présentant une valeur de chevauchement de soupapes de 30° d'angle de vilebrequin à 50° d'angle de vilebrequin.

13. Unité de cogénération fixe et/ou véhicule, en particulier véhicule utilitaire, permettant de mettre en oeuvre un procédé selon l'une des revendications 1 à 11 et/ou comprenant un dispositif selon la revendication 12.
